# EUROPÄISCHE PATENTSCHRIFT

(11) **EP 1 442 950 B1**
(45) Veröffentlichungstag und Bekanntmachung des Hinweises auf die Patenterteilung: **31.05.2006**
(21) Anmeldenummer: 03026167.1
(22) Anmeldetag: 17.11.2003
(51) Int. Cl.: B60S 1/04

(54) **Scheibenwischerantriebseinrichtung**
Windshield wiper drive device
Dispositif d`entrainement d`éssuie-glace

(30) Priorität: 30.01.2003 DE 10303586
(43) Veröffentlichungstag der Anmeldung: 04.08.2004
(73) Patentinhaber: ROBERT BOSCH GMBH, 70442 Stuttgart (DE)
(72) Erfinder: Gharbi, A Sofiene, 76137 Karlsruhe (DE)

(56) Entgegenhaltungen:
- EP-A- 0 382 346
- EP-A- 1 266 810
- FR-A- 2 734 613
- US-A- 5 261 286

## Beschreibung

Die Erfindung betrifft eine Scheibenwischerantriebseinrichtung gemäß dem Oberbegriff des Anspruchs 1.

Eine derartige Scheibenwischerantriebseinrichtung ist durch offenkundige Vorbenutzung und aus der EP-A -0382346 bekannt. Oftmals ist es bei der Befestigung der Halteeinrichtung am Fahrzeugrahmen notwendig, die Halteeinrichtung in einer bestimmten Position bzw. Orientierung am Fahrzeug zu verbauen. Dies bedingt meist eine baulich sehr aufwendige Halte- bzw. Umlenkeinrichtung. Ferner kann durch bauliche Gegebenheiten eine Anordnung der Halteeinrichtung derart notwendig sein, dass die Umlenkeinrichtung um andere Fahrzeug-Bauteile herum ausgeführt werden muss, was ebenfalls hohen Aufwand erfordert.

Es ist daher die Aufgabe der vorliegenden Erfindung, eine Scheibenwiseherantriebseinrichtung der eingangs genannten Art derart weiterzubilden, dass eine höhere Flexibilität bei der Anordnung der mindestens einen Halteeinrichtung gegeben ist.

Die Aufgabe ist erfindungsgemäß gelöst durch eine Scheibenwischerantriebseinrichtung mit den Merkmalen des Anspruchs 1.

Erfindungsgemäß wurde erkannt, dass eine von Haus aus stabilere Befestigung der Halteeinrichtung am Fahrzeugrahmen zur Möglichkeit führt, die Halteeinrichtung variabler am Fahrzeugrahmen zu befestigen. Insgesamt kann die Halteeinrichtung dann zur Aufnahme größerer Kräfte ausgelegt sein und auch in einer in Bezug auf die beim Scheibenwischerantrieb wirkenden Kräfte ungünstigeren Position bzw. Orientierung angeordnet sein.

Durch das Vorsehen von zwei voneinander beabstandeten Befestigungspunkten ist zudem die Gefahr eliminiert, dass sich die Halteeinrichtung im Wischerbetrieb unerwünscht verlagert. Aufgrund der größeren Variabilität bei der Anbringung der mindestens einen Halteeinrichtung am Fahrzeugrahmen kann die Umlenkeinrichtung einfacher ausgeführt sein. Insbesondere lassen sich Situationen vermeiden bzw. entschärfen, in denen andere Fahrzeug-Bauteile mit der Umlenkeinrichtung umbaut werden müssen. Die größere Variabilität bei der Anbringung der Halteeinrichtung ist insbesondere dann von Vorteil, wenn die Umlenkeinrichtung zumindest teilweise als Antriebsgestänge ausgeführt ist. Im Vergleich zum Stand der Technik können dann Gestänge-Rohre mit einfacheren Formen, d. h. im Wesentlichen gerade Rohre, zum Aufbau der Umlenkeinrichtung eingesetzt sein.

Zwei Halteeinrichtungen nach Anspruch 2 führen zu einer zusätzlichen Erhöhung der Befestigungsstabilität für die Scheibenwischerantriebseinrichtung.

Eine Haltestange nach Anspruch 3 ist eine besonders einfach aufgebaute Komponente des starren Teils der Umlenkeinrichtung.

Erfindungsgemäß führt eine vom Wischerblatt-Lager beabstandet angeordnete Antriebs-Befestigungseinheit zu einer Halteeinrichtung mit potentiell hoher Verwindungssteifigkeit. Des Weiteren verringert

eine Gitterverstrebung das Gewicht der Halteeinrichtung, wobei gleichzeitig eine gute Stabilität gegeben ist.

Befestigungspunkte nach Anspruch 4 können einfach realisiert werden.

Ein Ausführungsbeispiel der Erfindung wird nachfolgend anhand der Zeichnung näher erläutert. In dieser zeigen:
- Fig. 1: eine Scheibenwischerantriebseinrichtung;
- Fig. 2: eine perspektivische Ansicht einer Halteeinrichtung zur Halterung eines Teils einer Antriebs-Umlenkeinrichtung sowie eines Wischerblatt-Lagerzapfens; und
- Fig. 3 bis 5: weitere Ansichten der Halteeinrichtung von Fig. 2 aus unterschiedlichen Richtungen.

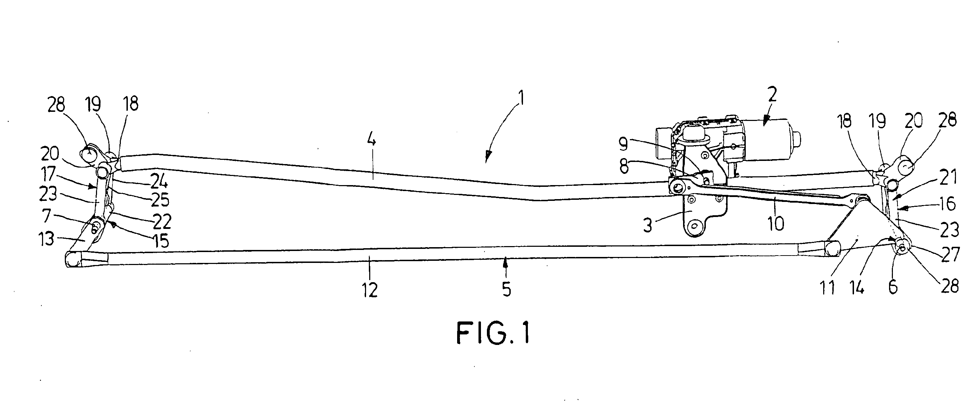

Eine in Fig. 1 insgesamt mit 1 bezeichnete Scheibenwischerantriebseinrichtung weist einen Antriebsmotor 2 auf, der über eine Halteplatte 3 an einer Haltestange 4 und einem nicht dargestellten Fahrzeugrahmen befestigt ist. Die Haltestange 4 gehört zum starren Teil einer Umlenkeinrichtung 5 zur Umsetzung der Antriebsbewegung des Antriebsmotors 2 in eine Wischer-Drehbewegung zweier Wischerblatt-Lagerzapfen 6, 7, an denen in der Zeichnung nicht dargestellte Wischerblätter befestigbar sind.

Die Umlenkeinrichtung 5 ist als Antriebsgestänge ausgeführt. Hierbei ist ein Ende eines ersten Übertragungshebels 8 drehfest mit einer Antriebswelle 9 des Antriebsmotors 2 verbunden. Am anderen Ende ist der Übertragungshebel 8 an einem Ende einer Übertragungsstange 10 angelenkt. Das andere Ende der Übertragungsstange 10 ist an einer Ecke eines Dreieckshebels 11 angelenkt. Eine zweite Ecke des Dreieckshebels 11 ist drehfest mit dem ersten Wischerblatt-Lagerzapfen 6 verbunden. An der dritten Ecke des Dreieckshebels 11 ist ein Ende einer Antriebsstange 12 angelenkt, deren anderes Ende an einem Ende eines weiteren Übertragungshebels 13 angelenkt ist. Die Antriebsstange 12 verläuft im Wesentlichen parallel zur Haltestange 4 und ist zu dieser derart beabstandet, dass zwischen den beiden Stangen 4, 12 Freiraum für weitere Fahrzeug-Bauelemente verbleibt. Das andere Ende des Übertragungshebels 13 ist drehfest mit dem zweiten Wischerblatt-Lagerzapfen 7 verbunden.

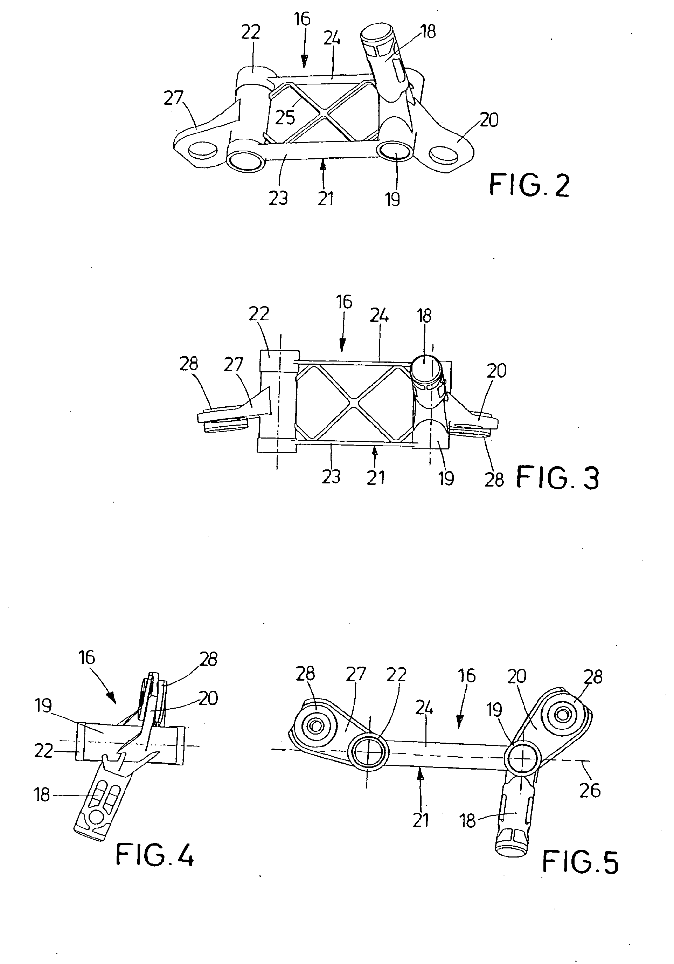

Zur Festlegung der Haltestange 4 und damit des starren Teils der Umlenkeinrichtung 5 sowie zur Aufnahme von Wischerblatt-Lagern 14, 15 dienen zwei spiegelsymmetrisch zueinander, ansonsten aber baugleich ausgebildete Halteeinrichtungen 16, 17. Nachfolgend genügt es also, die Halteeinrichtung 16 zu beschreiben, die auch in den Fig. 2 bis 5 dargestellt ist.

Zur Festlegung der Haltestange 4 dient ein Crimpzapfen 18 als Antriebs-Befestigungseinheit, auf den ein freies Ende der als Rohr ausgebildeten Haltestange 4 aufgeschoben und mittels einer Crimpzange befestigt ist. Der Crimpzapfen 18 ist einstückig mit einem Rohrelement 19 der Halteeinrichtung 16 verbunden, wobei die Längsachse des Crimpzapfens 18 mit derjenigen des Rohrelements 19 einen stumpfen Winkel einschließt. Ebenfalls einstückig mit dem Rohrelement 19 verbunden ist eine Anschraublasche 20, welche einen ersten Befestigungspunkt zur Befestigung der Halteeinrichtung 16 am Fahrzeugrahmen darstellt. Eine durch die Anschraublasche 20 vorgegebene Schraubachse steht im Wesentlichen senkrecht auf der Längsachse des Crimpzapfens 18 und ist im Wesentlichen parallel zur Längsachse des Rohrelements 19.

Über eine Gitterverstrebung 21 als Verbindungsglied ist das Rohrelement 19 der Halteeinrichtung 16 mit einer Wischerblatt-Lagerbuchse 22 des Wischerblatt-Lagers 14 verbunden. Die Längsachse der Wischerblatt-Lagerbuchse 22 ist parallel zu derjenigen des Rohrelements 19. Die Gitterverstrebung 21 weist zwei voneinander beabstandete und senkrecht zu den Längsachsen des Rohrelements 19 und der Wischerblatt-Lagerbuchse 22 verlaufende Hauptstreben 23, 24 sowie zwischen diesen verlaufende Gitterstreben 25 auf. Die Gitterstreben 25 schließen mit den Längsachsen des Rohrelements 19 und der Wischerblatt-Lagerbuchse 22 einerseits und den Hauptstreben 23, 24 andererseits ungefähr einen 45 °-Winkel ein. Die Streben 23 bis 25 geben eine Gitterebene 26 vor (vgl. Fig. 5).

Einstückig mit der Wischerblatt-Lagerbuchse 22 verbunden ist eine zweite Anschraublasche 27. Die von der zweiten Anschraublasche 27 vorgegebene Schraubachse verläuft im Wesentlichen parallel zu derjenigen der ersten Anschraublasche 20 und ist zu dieser beabstandet.

In den Fig. 1 sowie 3 bis 5 sind die Anschraublaschen 20, 27 mit einem Schraubeinsatz 28 zur Befestigung am Fahrzeugrahmen dargestellt.

Dadurch, dass die Längsachse des Crimpzapfens 18 einen stumpfen Winkel mit der Gitterebene 26 und mit einer Verbindungslinie, welche senkrecht auf den Schraubachsen der Anschraublaschen 20, 27 steht und diese verbindet, einschließt, und dadurch, dass die Längsachse der Wischerblatt-Lagerbuchse 22 senkrecht auf dieser Verbindungslinie steht, ist eine gute Stabilität der Halteeinrichtung 16 insbesondere gegenüber Kräften gegeben, die beim Wischerantrieb über die Umlenkeinrichtung 5 auf die Halteeinrichtung 16 übertragen werden.

## Patentansprüche

1. Scheibenwischerantriebseimichtung (1)
- mit mindestens einem Antriebsmotor (2),
- mit einer Umlenkeinrichtung (5) zur Umsetzung der Antriebsbewegung des Antriebsmotors (2) in eine Wischer-Drehbewegung um mindestens eine Wischerblatt-Lagerachse,
- mit mindestens einer Halteeinrichtung (16, 17), die eine Antriebs-Befestiguogseinheit (18) zur Festlegung eines starren Teils (4) der Umlenkeinrichtung (5) an einem Fahrzeugrahmen und ein Wischerblatt-Lager(14,15), aufweist, wobei
- die Haltesinrichtung (16, 17) an zwei voneinander beabstandeten Befestigungspunkten (20, 27) mit dem Fahrzeugrahmen verbindbar ist, und
- die Antriebs-Befestigungseinheit (18) von der Wischerblatt-Lagerachse beabstandet angeordnet ist wobei die Halteeinrichtung (16, 17) ein der Antriebs-Befestigungseinheit (18) benachbartes Rohrelement (19) mit zum Wischerblatt-Lager (14, 15) paralleler und von diesem beabstandeter Längsachse aufweist, und das Rohrelement (19) am Wischerblatt-Lager (14) über ein Verbindungsglied (21) festgelegt ist und das Verbindungsglied (21) eine Gitterverstrebung mit einer Gitterebene (26) aufweist, **dadurch gekennzeichnet, dass** in der Gitterebene (26) die Längsachsen des Rohrelements (19) und des Wischerblatt-Lagers (14) liegen, wobei Streben (25) der Gitterverstrebung mit den Längsachsen einen Winkel zwischen 0 und 90 ° einschließen.

2. Scheibenwischerantriebseinrichtung nach Anspruch 1, **dadurch gekennzeichnet, dass** zwei Halteeinrichtungen (16, 17) vorgesehen sind, zwischen denen der starre Teil (4) der Umlenkeinrichtung (5) festgelegt ist.

3. Scheibenwischerantriebseinrichtung nach Anspruch 2, **dadurch gekennzeichnet, dass** der starre Teil (4) der Umlenkeinrichtung (5) eine zwischen den Antriebs-Befestigungseinheiten (18) festgelegte Haltestange aufweist.

4. Scheibenwischerantriebseinrichtung nach einem der Ansprüche 1 bis 3, **dadurch gekennzeichnet, dass** die Befestigungspunkte (20, 27) durch Anschraublaschen gebildet sind.

## Claims

1. Windscreen wiper drive device (1)
- with at least one drive motor (2),
- with a deflecting device (5) for converting the drive movement of the drive motor (2) into a rotational movement of the wiper about at least one wiper-blade bearing axis,
- with at least one holding device (16, 17) which has a drive fastening unit (18) for fixing a rigid part (4) of the deflecting device (5) to a vehicle frame, and a wiper-blade bearing (14, 15),
- the holding device (16, 17) being connectable to the vehicle frame at two mutually spaced apart fastening points (20, 27), and
- the drive fastening unit (18) being spaced apart from the wiper-blade bearing axis, with the holding device (16, 17) having a tube element (19) which is adjacent to the drive fastening unit (18) and has a longitudinal axis parallel to the wiper-blade bearing (14, 15) and spaced apart therefrom, and the tube element (19) being fixed to the wiper-blade bearing (14) via a connecting element (21) and the connecting element (21) having a lattice strutting with a lattice plane (26), **characterized in that** the longitudinal axes of the tube element (19) and of the wiper-blade bearing (14) lie in the lattice plane (26), with struts (25) of the lattice strutting enclosing an angle of between 0 and 90° with the longitudinal axes.

2. Windscreen wiper drive device according to Claim 1, **characterized in that** two holding devices (16, 17) are provided between which the rigid part (4) of the deflecting device (5) is fixed.

3. Windscreen wiper drive device according to Claim 2, **characterized in that** the rigid part (4) of the deflecting device (5) has a holding rod fixed between the drive fastening units (18).

4. Windscreen wiper drive device according to one of Claims 1 to 3, **characterized in that** the fastening points (20, 27) are formed by screw-on tabs.

## Revendications

1. Dispositif d'entraînement d'essuie-glace (1) comprenant :
- au moins un moteur (2),
- une installation de renvoi (5) pour convertir le mouvement d'entraînement du moteur (2) en un mouvement de rotation d'essuyage autour d'au moins un axe de palier du balai d'essuie-glace,
- au moins une installation de fixation (16, 17) qui comporte une unité de fixation d'entraînement (18) pour fixer une partie rigide (4) de l'installation de renvoi (5) au véhicule et
- un palier de balai d'essuie-glace (14, 15),
- l'installation de fixation (16, 17) pouvant être reliée au châssis du véhicule en deux points de fixation (20, 27) écartés l'un de l'autre et l'unité de fixation d'entraînement (18) étant écartée de l'axe de palier du balai d'essuie-glace,
- l'installation de fixation (16, 17) ayant un élément de tube (19) voisin de l'unité de fixation d'entraînement (18) et dont l'axe longitudinal est parallèle et écarté de celui du palier de balai d'essuie-glace (14, 15) alors que l'élément de tube (19) est fixé au palier de balai d'essuie-glace (14) par un élément de liaison (21) qui présente des entretoises en treillis dans un plan (26),
**caractérisé en ce que**
l'élément tubulaire (19) et le palier de balai d'essuie-glace (14) se situent dans le plan (26) du treillis, les entretoises (25) du treillis faisant avec les axes longitudinaux un angle compris entre 0 et 90°.

2. Installation d'entraînement d'essuie-glace selon la revendication 1,
**caractérisée par**
deux installations de fixation (16, 17) entre lesquelles est fixée la partie rigide (4) de l'installation de renvoi (5).

3. Installation d'entraînement d'essuie-glace selon la revendication 2,
**caractérisée en ce que**
la partie rigide (4) de l'installation de renvoi (5) comporte une tige de fixation prévue entre les unités de fixation d'entraînement (18).

4. Installation d'entraînement d'essuie-glace selon l'une des revendications 1 à 3,
**caractérisée en ce que**
les points de fixation (20, 27) sont formés par des pattes de vissage.
